# DEMANDE DE BREVET EUROPEEN

(11) **EP 4 201 737 A1**
(43) Date de publication de la demande: **28.06.2023**
(21) Numéro de dépôt: 22213940.4
(22) Date de dépôt: 15.12.2022
(51) Int. Cl.: B60N 3/00, B60N 2/30, B60R 7/04, B60N 2/20

(54) **SIÈGE DE VÉHICULE DOTÉ D'UN DOSSIER MODULABLE AVEC UNE TABLETTE SUPPORT**

(30) Priorité: 23.12.2021 FR 2114356
(71) Demandeur: Renault s.a.s, 92100 Boulogne Billancourt (FR)
(72) Inventeur: BEZEAULT, Loic, 78280 GUYANCOURT (FR); DUCHENE, Vincent, 78280 GUYANCOURT (FR)

(57) **Abrégé**

L'invention se rapporte à un siège (1) de véhicule comprenant une assise (2) et un dossier (3) réglable en inclinaison autour d'un premier axe de rotation (5). Selon l'invention, le dossier (3) comprend un cadre (6) et un médaillon support (7) monté pivotant dans le cadre (6) entre une position fonctionnelle pour laquelle il est placé dans le cadre (6) et forme avec celui-ci le dossier (3), et une position déployée pour laquelle il a pivoté pour se retrouver en appui contre l'assise (2), laissant apparaitre une ouverture traversante (13) dans le dossier (3) qui est délimitée par le cadre (6), dans la position déployée le médaillon support (7) présentant une tablette support (16) couvrant ledit médaillon (7) et apte à être détachée pour venir se fixer à un emplacement particulier dudit médaillon (7) pour créer un support supplémentaire.

## Description

La présente invention concerne un siège de véhicule doté d'un dossier modulable avec une tablette support.

Afin de bien comprendre le positionnement des différentes pièces impliquées dans un siège selon l'invention, la description est réalisée en faisant l'hypothèse que le siège est placé dans le véhicule dans une position conventionnelle, et en faisant référence à un repère orthonormé direct XYZ dans lequel X est un axe longitudinal avant-arrière du véhicule orienté vers l'arrière, Y est un axe transversal orienté vers la droite du véhicule et Z est un axe vertical dirigé vers le haut.

Les expressions « médaillon » et « médaillon support » sont équivalentes.

Actuellement, la plupart des véhicules comprennent une rangée avant de sièges comportant un siège conducteur et un siège passager alignés suivant un axe transversal Y du véhicule. Dans certains de ces véhicules, afin d'augmenter le confort du conducteur en l'absence d'un passager assis à côté de lui, le dossier du siège passager peut être rabattu contre l'assise dudit siège passager, afin de créer un support horizontal. Ce dossier rabattu peut présenter différents reliefs et/ou éléments d'attache, dans le but de pouvoir supporter différents types d'objets, comme par exemple un ordinateur portable, un smartphone, un livre ou un bloc de papier. Ce dossier rabattu peut également présenter un porte-gobelet pour stocker un verre, une canette ou une bouteille.

Or, la manipulation d'un dossier complet de siège est lourde et malaisée. De plus, malgré sa fonction de support, le dossier une fois rabattu occupe une place importante au sein de l'habitacle du véhicule, limitant encore plus les espaces disponibles dans cet habitacle.

Un siège de véhicule selon l'invention présente un dossier configuré pour créer un support destiné à améliorer le confort d'un occupant qui serait assis sur un siège voisin, en s'affranchissant des inconvénients rencontrés dans les véhicules actuels.

L'invention a pour objet un siège de véhicule comprenant une assise et un dossier réglable en inclinaison autour d'un premier axe de rotation.

Selon l'invention, le dossier comprend un cadre réglable en inclinaison autour du premier axe de rotation et un médaillon support monté pivotant autour d'un deuxième axe de rotation du cadre entre une position fonctionnelle pour laquelle il est placé dans le cadre et forme avec celui-ci le dossier, et une position déployée pour laquelle il a pivoté autour du deuxième axe de rotation pour se retrouver en appui contre l'assise, en laissant apparaitre une ouverture traversante dans le dossier qui est délimitée par le cadre, le médaillon support présentant une tablette support apte à être déplacée entre une première position pour laquelle elle est en contact avec une surface du médaillon support (7) et une deuxième position pour laquelle elle crée un support supplémentaire. Le principe d'un siège selon l'invention est de posséder un dossier réalisé en deux parties, dont une première partie est constituée par un cadre et dont une deuxième partie est constituée par un médaillon support, ledit médaillon support ayant la même épaisseur que ledit cadre. De cette manière, lorsque le médaillon support pivote vers l'avant pour se retrouver dans la position déployée, il laisse apparaitre une ouverture traversante dans le cadre. Dans la position déployée, le médaillon support possède une face supérieure plane s'étendant dans un plan sensiblement horizontal, quelle que soit la position du cadre. La spécificité d'un siège selon l'invention est que le médaillon possède une tablette support qui peut être déplacée de sa première position pour occuper une deuxième position pour laquelle elle crée un support supplémentaire. De façon avantageuse mais non limitative, la tablette peut être déplacée, soit au moyen d'un mouvement de rotation sur le médaillon, soit en étant détachée dudit médaillon avant d'être fixée à un autre endroit qui est différent de la première position. Cet autre endroit peut par exemple être sur le médaillon support, soit sur un autre élément de structure d'un véhicule dans lequel serait inséré le siège. Lorsque le médaillon est dans la position déployée, et lorsque la tablette est dans la première position, ladite tablette recouvre ledit médaillon support et peut servir d'élément de support à différents objets. Lorsque le médaillon support se retrouve dans la position déployée et crée l'ouverture traversante dans le dossier, il devient possible de stocker dans le véhicule des objets de grande dimension pouvant passer par cette ouverture traversante. Préférentiellement, un siège selon l'invention est un siège passager avant situé à côté du siège conducteur. Le médaillon support peut être déplacé entre sa position opérationnelle et sa position déployée, soit manuellement, soit au moyen d'une motorisation et d'un organe de commande associé à cette motorisation. Dans la position fonctionnelle, le médaillon support est inséré dans le cadre et forme un dossier qui est légèrement incliné vers l'arrière par rapport à une position verticale. Avantageusement, cette inclinaison est inférieure à 25° et est préférentiellement égale à 20°. Préférentiellement, le médaillon support à une forme parallélépipédique. La tablette portée par le médaillon est une tablette support, préférentiellement réalisée en matière plastique. Une fois que le médaillon a pivoté vers l'avant pour se retrouver dans la position déployée, la tablette crée une surépaisseur sur le médaillon. Des moyens de verrouillage permettent de fixer la tablette au médaillon. Ces moyens de verrouillage peuvent par exemple être constitués par un bouton poussoir solidaire du médaillon et apte à piloter un élément d'accrochage mobile du médaillon et destiné à maintenir la tablette contre le médaillon. Une pression sur ledit bouton poussoir va déplacer cet élément d'accrochage pour libérer la tablette qui pourra alors se détacher du médaillon et venir se fixer à un emplacement bien particulier dudit médaillon présentant également un élément d'accrochage associé à un bouton poussoir. Lorsque le médaillon est dans la position fonctionnelle, la tablette est visible à l'arrière du siège et peut être accessible depuis une rangée arrière de sièges.

Selon une caractéristique possible de l'invention, les dimensions du médaillons support sont supérieures ou égales à celles de l'ouverture délimitée par le cadre, si bien que la position fonctionnelle le médaillon support est inséré dans le cadre en ne laissant subsister aucun jeu, et forme avec ledit cadre un dossier continu et uniforme. Il est important que le dossier d'un siège selon l'invention malgré le fait qu'il composé de deux parties distinctes, conserve tout son confort pour une personne qui serait assise sur ledit siège. Il ne faut donc pas que cette personne ressente une quelconque gêne liée à un décalage de position entre le médaillon support et le cadre. Dans la position fonctionnelle, le médaillon support est inséré dans le cadre de manière à donner l'impression que le dossier résultant est réalisé en une seule pièce.

Selon une caractéristique possible de l'invention, la tablette support est détachable du médaillon support, et une fois qu'elle a été détachée de celui-ci elle peut venir se fixer audit médaillon dans la deuxième position qui est différente de la première position.

Selon une caractéristique possible de l'invention, lorsque le médaillon support est dans la position déployée la tablette support dans la première position recouvre un compartiment supérieur dudit médaillon, et dans la deuxième position, ladite tablette découvre ledit compartiment pour permettre de stocker un objet dans celui-ci. De cette manière, lorsque la tablette support se retrouve dans la deuxième position, le médaillon présente un compartiment supérieur pouvant loger un objet, et ladite tablette est positionnée pour supporter un autre objet. Ce compartiment peut être matérialisé par une simple surface plane ou par un évidement délimité par des bords.

Selon une caractéristique possible de l'invention, deux sangles parallèles émergent du compartiment pour servir à maintenir un objet dans ledit compartiment. Lorsque la tablette est dans la deuxième position, elle découvre le compartiment et fait apparaitre deux sangles d. Un utilisateur pourra alors placer un objet comme par exemple un ordinateur portable, une tablette électronique, un smartphone ou un bloc de papier dans ledit compartiment, les sangles étant destinées à enserrer ledit objet pour le maintenir dans ledit compartiment. Avantageusement, au moins l'une desdites sangles est élastique.

Selon une caractéristique possible de l'invention, le compartiment est configuré pour recevoir un objet plan et de faible épaisseur. Un tel objet peut par exemple être représenté par un ordinateur portable, une tablette électronique ou un smartphone.

Selon une caractéristique possible de l'invention, dans la deuxième position la tablette support est fixée à l'avant du médaillon et s'étend dans un plan sensiblement horizontal, ladite tablette prolongeant vers l'avant une surface supérieure et horizontale dudit médaillon. Elle crée ainsi un support avant qui est facilement accessible pour un individu qui serait assis sur un siège voisin.

Selon une caractéristique possible de l'invention, la tablette support présente une première surface dotée de premiers reliefs et une deuxième surface dotée de deuxièmes reliefs, lesdites deux surfaces étant parallèles, la première surface ou la deuxième surface pouvant indifféremment être utilisée pour servir de support à un objet, que la tablette soit dans la première position ou dans la deuxième position.

En d'autres termes, cette possible configuration souligne la réversibilité de la tablette. Elle peut ainsi présenter une première surface sur laquelle peut être posé un certain type d'objet adapté aux premiers reliefs. Il suffit de détacher la tablette puis de la retourner pour la fixer au même endroit sur le médaillon, afin qu'elle puisse présenter la deuxième surface sur laquelle peut être posé un autre type d'objet adapté aux deuxièmes reliefs.

Selon une caractéristique possible de l'invention, la tablette support est montée en rotation sur le médaillon support entre la première position et la deuxième position.

Selon une caractéristique possible de l'invention, la deuxième position est une position de présentation correspondant, lorsque le médaillon support est dans la position fonctionnelle, à une position horizontale de la tablette support qui s'étend vers l'arrière du siège, et correspondant, lorsque le médaillon support est dans la position déployée, à une position légèrement inclinée vers l'arrière par rapport à une position verticale. En fonction de la position du médaillon support, la tablette support dans la deuxième position de présentation, a une double fonction :
- elle peut servir d'élément de support horizontal d'objets pour des personnes qui seraient assises sur une rangée de sièges placée derrière un siège selon l'invention, lorsque le médaillon support est dans la position fonctionnelle,
- elle peut servir lorsque le médaillon support est dans la position déployée de présentoir pour un objet de type smartphone, tablette électronique, ordinateur portable ou livre pour permettre à une personne qui serait assise sur un siège voisin situé à côté d'un siège selon l'invention de lire confortablement ledit livre ou les différents signes apparaissant sur les écrans électroniques de ces objets électroniques.

Selon une caractéristique possible de l'invention, la tablette support est détachable du médaillon support uniquement dans la position de présentation. En effet, les moyens d'accrochages de la tablette support sur le médaillon support sont configurés de telle sorte que ladite tablette support puisse être détachée du médaillon support au moyen d'un coulissement de celle-ci hors desdits moyens d'accrochage et dans le plan de la tablette support une fois qu'elle a atteint la deuxième position de présentation.

L'invention a pour autre objet un véhicule comprenant un siège selon l'invention.

Selon l'invention, la tablette présente une empreinte, ladite tablette étant apte à venir se fixer au volant dudit véhicule dans une position horizontale grâce à une insertion d'un tronçon en arc-de-cercle du volant dans ladite empreinte. Pour cette configuration, l'empreinte de la tablette est adaptée pour recevoir une partie du volant en arc-de-cercle de façon à arrimer la tablette audit volant dans la position horizontale. Préférentiellement, cette empreinte est auto-suffisante, c'est-à-dire qu'elle ne nécessite l'utilisation d'aucun outil particulier pour fixer la tablette au volant. Il suffit de la caler manuellement sur le volant, en insérant un tronçon en arc-de-cercle du volant dans l'empreinte puis en procédant à de petits réajustements manuels afin qu'elle s'étende bien dans un plan horizontal. Pour cette configuration, a deuxième position de la tablette support est sur le volant du véhicule.

Un siège selon l'invention présente l'avantage de posséder un dossier apte à pouvoir se transformer en un support d'objets, grâce à une manipulation aisée d'un tronçon de petite dimension dudit dossier. Ce tronçon support peu encombrant, peut donc facilement et rapidement être mise en oeuvre sans nécessiter un espace de dégagement important dans le véhicule. De même, puisque ce tronçon est de petite dimension il peut être manipulé sans effort particulier. Ledit siège a de plus l'avantage de présenter une tablette support fixée au médaillon support, et qui a la capacité, soit d'être détachée dudit médaillon, soit d'être montée mobile en rotation sur ledit médaillon, pour multiplier les configurations de support d'objets au sein du véhicule.

On donne ci-après, une description détaillée d'un mode de réalisation préféré d'un siège selon l'invention, en se référant aux figures suivantes :
[Fig. 1] représente une vue en perspective d'un siège selon l'invention, le médaillon support étant dans la position fonctionnelle,
[Fig. 2] représente une vue en perspective du siège de la figure 1, le médaillon support étant dans la position déployée,
[Fig. 3] représente une vue de côté du siège de la figure 2,
[Fig. 4] représente une vue en perspective d'un médaillon support d'un siège selon l'invention, portant une tablette dans une position inactive,
[Fig. 5] représente une vue de côté d'un siège selon l'invention, le médaillon support étant dans une position déployée et la tablette support étant dans une position active,
[Fig. 6] représente une vue en perspective d'une assise et d'un médaillon d'un siège selon l'invention, ledit médaillon étant dans la position déployée et la tablette étant dans une position active.
[Fig. 7] représente une vue en perspective d'une assise et d'un médaillon d'un siège selon l'invention, ledit médaillon étant dans la position déployée et supportant un ordinateur portable et la tablette étant dans une position active,
[Fig. 8] représente une vue en perspective d'une zone avant d'un habitacle de véhicule comprenant un siège selon l'invention, et montrant la tablette support arrimée au volant,
[Fig. 9] représente une vue en perspective de la zone avant de la figure 8, sous un autre angle,
[Fig. 10] représente une vue de face d'une structure de dossier d'un siège selon l'invention,
[Fig.11] représente une vue en perspective d'une partie arrière d'un siège selon l'invention, la tablette support étant dans la première position,
[Fig. 12] représente une vue en perspective d'une partie arrière d'un siège selon l'invention, la tablette support étant dans une position intermédiaire,
[Fig.13] représente une vue en perspective d'une partie arrière d'un siège selon l'invention, la tablette support étant dans la deuxième position,
[Fig.14] représente une vue de côté d'un élément d'accrochage de la tablette support sur le médaillon support, la tablette support étant solidarisée audit médaillon support,
[Fig.15] représente une vue de côté d'un élément d'accrochage de la tablette support sur le médaillon support, la tablette étant désolidarisée dudit médaillon support,

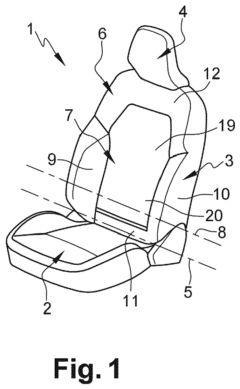

En se référant aux figures 1, 2, 3 et 5 un siège 1 de véhicule selon l'invention comprend une assise 2, un dossier 3 et un appuie-tête 4 monté sur ledit dossier 3 et réglable en hauteur. Le dossier 3 est monté pivotant autour d'un premier axe 5 de rotation, placé dans une zone arrière de l'assise 2, de manière à être réglable en inclinaison. De cette manière et de façon conventionnelle, le dossier 3 peut occuper une multitude de positions autour de ce premier axe de rotation 5, et un individu assis sur le siège 1 pourra régler à sa convenance l'inclinaison de ce dossier 3 pour obtenir le meilleur confort possible sur ledit siège 1.

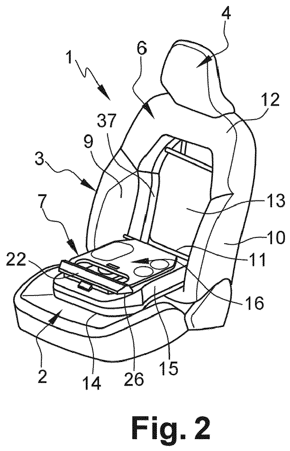

En se référant aux figures 1, 2, 3, et 5, le dossier 3 d'un siège selon l'invention est réalisé en deux parties, dont une première partie représente un cadre 6 et dont une deuxième partie représente un médaillon support 7 plein monté pivotant dans ledit cadre 6 autour d'un deuxième axe de rotation 8. Le cadre 6 est sensiblement de forme rectangulaire, et comprend deux grands segments 9, 10 parallèles et deux petits segments parallèles 11, 12, lesdits grands segments 9, 10 étant perpendiculaires auxdits petits segments 11, 12. Parmi les deux petits segments 11, 12, on distingue un petit segment supérieur 12 et un petit segment inférieur 11, ledit petit segment supérieur 12 étant placé au-dessus du petit segment inférieur 11. Les extrémités des petits segments 11, 12 joignent les extrémités des grands segments 9, 10. Les grands segments 9, 10 saillent vers l'avant du dossier 3 et sont destinés à encadrer étroitement le dos d'un individu qui serait assis sur le siège 1, pour empêcher cet individu de basculer sur les côtés du siège 1 à chaque virage du véhicule. Le médaillon support 7 est une pièce pleine, qui est apte à passer par une rotation autour du deuxième axe 8, d'une position fonctionnelle pour laquelle il est rentré dans le cadre 6, comme cela est illustré à la figure 1, à une position déployée pour laquelle il vient en appui contre l'assise 2, comme cela est illustré aux figures 2, 3 et 5.

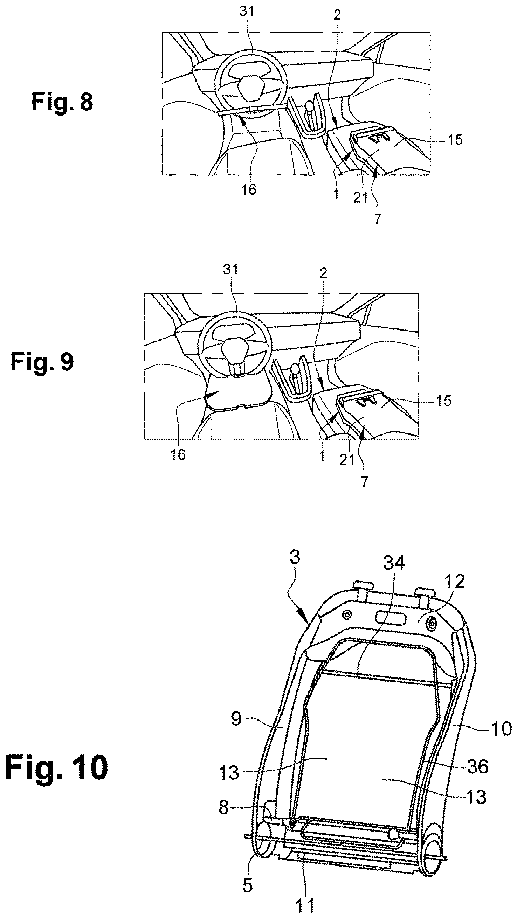

En se référant aux figures 1 et 10, le deuxième axe 8 de rotation est placé au-dessus du premier axe de rotation 5, lesdits deux axes 5, 8étant parallèles.

En se référant à la figure 1, le petit segment inférieur 11 du cadre 6 est placé au-dessus de l'assise 2. Dans la position fonctionnelle, le médaillon support 7 est inséré dans le cadre 6 pour former un dossier 3 résultant plein et continu. L'épaisseur du médaillon support 7 est sensiblement identique à celle du cadre 6, si bien que dans la position fonctionnelle, ledit médaillon support 7 arase le cadre 6 en donnant l'impression que le dossier 3 présente une surface d'appui pour le dos d'une personne qui serait assise sur le siège, parfaitement lisse et continue. En effet, dans la position fonctionnelle, le médaillon support 7 ne crée aucun relief avec le cadre 6 et ne présente aucun jeu avec celui-ci pouvant laisser apparaitre des rainures disgracieuses aptes à gêner le dos d'un individu qui reposerait contre le dossier 3.

En se référant aux figures 2, 3 et 5, le médaillon support 7 a pivoté d'un angle sensiblement inférieur à 120°, pour passer de la position fonctionnelle à la position déployée. Dans la position déployée, le médaillon support 7 s'étend sur l'assise 2 dans un plan qui est sensiblement horizontal et engendre l'apparition d'une ouverture traversante 13 dans le dossier 3 correspondant à l'ouverture délimitée par le cadre 6. Quelle que soit la position du cadre 6, le médaillon support 7, lorsqu'il est placé dans la position déployée, présente une surface supérieure qui s'étend toujours dans un plan horizontal.

Il est naturellement supposé que le médaillon support 7 peut également passer de la position déployée à la position fonctionnelle au moyen d'une rotation en sens inverse avec la même amplitude.

Préférentiellement, le médaillon support 7 est manipulé avec la main pour passer d'une position à l'autre. Dans ce cas, une languette solidarisée au médaillon support 7 et saillant du dossier 3 lorsque le médaillon support 7 est dans la position fonctionnelle, peut être saisie à la main pour pouvoir exercer un effort de traction sur le médaillon support 7 afin de le faire pivoter relativement au cadre 6.

Selon une autre variante de réalisation d'un siège 1 selon l'invention, le médaillon est motorisé et peut être déplacé entre la position fonctionnelle et la position déployée au moyen d'un élément de commande associée à une motorisation, et qui peut être actionné manuellement. Cet élément de commande peut par exemple être un bouton poussoir.

En se référant aux figures 2, 3, 4, 5, 6, 7, le module support 7 est réalisée en trois parties :
- une embase rigide 14 montée pivotante autour du deuxième axe de rotation 8,
- un module 15 qui est fixé à ladite embase 14,
- une tablette support 16 qui est fixée audit module 15.

Selon une variante de réalisation d'un siège selon l'invention et qui ne sera pas décrite ici, l'embase rigide 14 et le module 15 sont venus de matière et constituent une seule et même pièce.

L'embase 14 comprend une coque rigide de fine épaisseur, présentant une première face contre laquelle est destiné à venir se fixer le module 15 et une deuxième face contre laquelle est destiné à venir se solidariser un coussin 19 constitué par une mousse et un textile enveloppant ladite mousse. La première face et la deuxième face sont parallèles, et lorsque le médaillon support 7 est dans la position fonctionnelle, le module 15 est situé derrière la coque rigide et une surface 20 avant du coussin 19 contre laquelle est destiné à venir en appui le dos d'une personne qui serait assise sur le siège 1, arase une surface avant du cadre 6 comme cela est illustré à la figure 1. De cette manière, une surface avant du dossier 3 incluant une surface avant 20 du médaillon support 7 et une surface avant du cadre 6, présente une certaine continuité, en ne montrant aucune aspérité liée à un quelconque décalage entre ledit médaillon 7 et ledit cadre 6.

De façon avantageuse, le module 15 est fixé à la coque rigide de l'embase14 par clippage.

La tablette support 16 est apte à être déplacée pour passer d'une première position pour laquelle elle vient en appui contre une surface 21 du module support 7, à une deuxième position pour laquelle elle va créer un support supplémentaire dans le véhicule dans lequel serait monté un siège 1 selon l'invention. En se référant aux figures 2, 3, 4, 5, 6 et 7, lorsque le médaillon support 7 est dans la position déployée, la tablette support 16 qui est préférentiellement réalisée en matière plastique et qui est constituée par une pièce plane et de faible épaisseur, avantageusement inférieure à 1cm, vient en appui contre une surface supérieure plane 21 du module 15. Cette surface plane 21 s'étend horizontalement et constitue la partie la plus haute du module 15, et la tablette support 16 repose sur ladite surface 21 en étant donc placée sur ledit module 15.

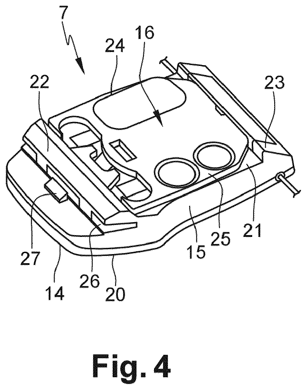

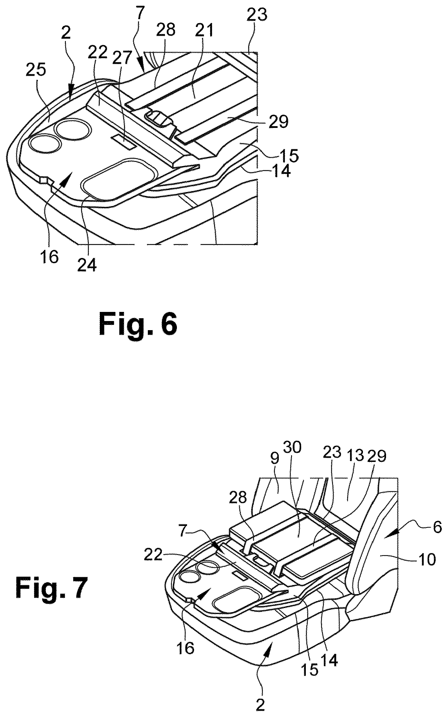

En se référant aux figures 4 et 6, Cette surface plane 21 est délimitée par un bourrelet avant 22 s'étendant suivant un axe transversal Y du véhicule et par un bord arrière 23 qui est parallèle audit bourrelet avant 22. Lorsque la tablette support 16 est dans la première position, elle repose sur le module 15 du médaillon 7, et est insérée entre le bourrelet avant 22 et le bord arrière 23. La première position correspond à une position de stockage de la tablette support 16 par défaut, pour laquelle ladite tablette 16 n'occupe pas une fonction spécifique de support d'objet. Toutefois, comme cela est visible sur les figures 4 et 7, la tablette 16 peut présenter certains reliefs 24, 25 particuliers permettant à un utilisateur de poser certains objets sur celle-ci et plus spécifiquement sur lesdits reliefs 24, 25.

Cette tablette 16 support est montée sur le module 15 avec des moyens de verrouillage qui peuvent être désactivés manuellement, de manière à pouvoir détacher ladite tablette 16 du module 15. Ces moyens de verrouillage peuvent, par exemple, être constitués par un bouton poussoir associé à des moyens d'accrochage mobiles, une pression sur ledit bouton engendrant un déplacement desdits moyens d'accrochage qui ne retiennent alors plus la tablette 16 contre le module 15.

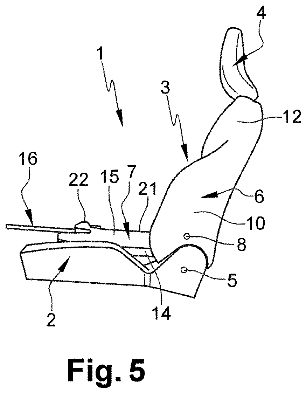

En se référant aux figures 5, 6, 7, selon un premier mode de réalisation d'un siège selon l'invention, le déplacement de la tablette support 16 peut être effectuée au moyen d'un détachement préalable de ladite tablette support 16 du module support 7, pour venir occuper la deuxième position. Ainsi, une fois que la tablette 16 a été détachée du module 15, elle peut occuper la deuxième position sur le module 15, en étant fixée à celui-ci de l'autre côté du bourrelet 22 avant, c'est-à-dire à l'avant dudit bourrelet 22. Plus précisément, le bourrelet avant 22 comprend une fente avant 26 s'étendant horizontalement sur toute la longueur dudit bourrelet 22. La fixation de la tablette 16 dans la deuxième position s'effectue en insérant la tablette 16 dans cette fente avant 26, jusqu'à enclencher des moyens d'accrochage. Ces moyens d'accrochage sont associés à un bouton poussoir 27 de déverrouillage, et une pression sur ledit bouton 27 va engendrer un déplacement de ces moyens de verrouillage, qui ne vont alors plus retenir la tablette 16 dans la deuxième position.

De cette manière, dans la deuxième position, la tablette 16 prolonge le module 15 vers l'avant, en s'étendant dans un plan horizontal et en étant dans le parfait alignement de la surface supérieure 21 plane dudit module 15. Différents objets, tels que par exemple, un smartphone, un bloc de papier, ou un gobelet peuvent ainsi être posés sur la tablette 16 dans la position active. Si le siège 1 selon l'invention, était un siège passager placé à côté du siège conducteur, ledit conducteur pourrait facilement accéder à ces objets situés devant lui sur la tablette 16 déployée à l'avant du médaillon 7 du siège passager.

En se référant à la figure 7, lorsque la tablette 16 a été détachée pour venir occuper la deuxième position, elle libère un compartiment du module 15 situé entre le bourrelet avant 22 et le bord arrière 23 et délimité par la surface supérieure 21 du module 15. Deux sangles 28, 29 fermées et parallèles émergent de ce compartiment pour maintenir un objet qui aurait été placé dans ledit compartiment. Préférentiellement, au moins l'une desdites sangles 28, 29 est élastique. Cet objet peut par exemple être constitué par un ordinateur portable 30 qui serait inséré entre la surface supérieure 21 du module 15 et lesdites deux sangles 28, 29.

En se référant aux figures 8, 9 la tablette support 16 possède une empreinte qui est configurée pour permettre de fixer ladite tablette 16 au volant 31 du véhicule, dans une position horizontale. En effet, une fois que la tablette 16 a été détachée du module 15 du médaillon 7, au lieu d'être fixée audit médaillon 7 dans la deuxième position, elle peut venir se fixer au volant 31. Pour ce faire, la tablette 16 présente une empreinte dont la forme spécifique permet une insertion dans celle-ci d'un segment périphérique en arc-de-cercle du volant 31. La tablette 16 en s'étendant horizontalement devant le conducteur constitue pour celui-ci un support, où il pourra déposer un certain nombre d'objets. Dans cette position particulière, la tablette 16 vient compléter le bureau qui aura été préalablement créé par le médaillon 7 dans la position déployée, sur le siège passager.

En se référant à la figure 10, le cadre 6 du dossier 3 supporte une tige 34 horizontale rigide, joignant les deux grands segments 9, 10 dudit cadre 6. Plus précisément, chacun desdits deux grands segments 9, 10 présente une zone supérieure et la tige 34 s'étend horizontalement en joignant lesdites deux zones supérieures. Cette tige 34 est placée à l'arrière de ces deux grands segments 9, 10 et sert de butée au médaillon support 7 lorsque celui-ci est placé dans la position fonctionnelle. En effet, lorsque ce médaillon support 7 est placé dans la position fonctionnelle, il ne faut pas qu'il traverse le cadre 6 du dossier 3 au point de saillir derrière celui-ci. En étant placé dans la position fonctionnelle, le médaillon support 7 vient en appui contre cette tige horizontale 34 et, lorsqu'il est en appui contre celle-ci, la surface avant 20 du coussin 19 de l'embase rigide 14 s'inscrit dans le cadre 6 en étant dans une parfaite continuité avec celui-ci.

En se référant aux figures 1 et 10, un textile tendu 35 enrobe cette tige horizontale 34 afin de masquer ladite tige 34 et rendre le siège 1 plus attrayant visuellement.

De même, le cadre 6 du dossier 3 supporte un cadre tubulaire secondaire 36, placé à la périphérie de l'ouverture 13 délimitée par ledit cadre 6 pour également servir d'appui au médaillon support 7 lorsque celui-ci est dans la position fonctionnelle. Un textile 37 vient également enrober ce cadre tubulaire secondaire 36 par l'extérieur, pour le soustraire à la vue des occupants du véhicule, cet enrobage ayant pour conséquence de diminuer les dimensions de l'ouverture traversante 13 délimitée par le cadre 6. Ce cadre tubulaire secondaire 36 vient compléter la tige horizontale 34 pour constituer une butée destinée à stopper la course du médaillon support 7 lorsqu'il est replacé dans la position fonctionnelle.

Les dimensions du médaillon support 7 sont supérieures ou égales à celles de l'ouverture traversante 13 délimitée par la cadre 6, si bien que pour atteindre la position fonctionnelle ledit médaillon support 7 doit être introduit dans ladite ouverture 13 avec un certain effort. Cette introduction à force va induire des frottements qui vont permettre de maintenir solidement le médaillon support 7 dans ladite ouverture 13 garantissant ainsi une stabilité positionnelle dudit médaillon 7 dans ladite ouverture 13 lorsqu'il se retrouve dans la position fonctionnelle. En alternative, le médaillon support 7 peut être rentré dans le cadre 6 sans aucun effort particulier, et dans ce cas, des éléments de verrouillage conventionnels tels que par exemple une serrure ou un pêne de blocage peuvent être actionnés pour maintenir le médaillon support 7 dans le cadre 6.

Une languette solidarisée au médaillon support 7 et émergeant du dossier 3 lorsque le médaillon support 7 est dans la position opérationnelle, peut servir d'élément de préhension afin de manipuler ledit médaillon 7 dans le but de le faire basculer vers l'avant jusqu'à la position déployée.

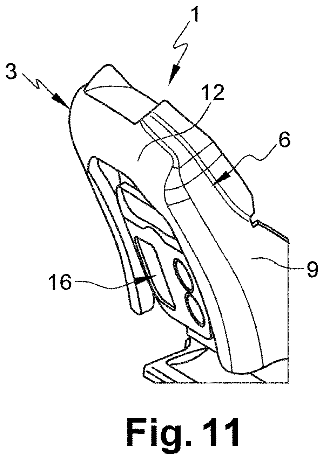

En se référant aux figures 11 à 13, selon un deuxième mode de réalisation d'un siège selon l'invention, le déplacement de la tablette support 16 peut être effectuée par une rotation directement sur le médaillon support 7. Pour ce mode de réalisation, la première position de la tablette support 16 qui est illustrée à la figure 11, correspond à une mise en appui de ladite tablette support 16 contre la surface 21 du médaillon support 7, que ledit médaillon support 7 soit dans la position fonctionnelle, comme illustrée aux figures 11, 12, 13, ou dans la position déployée comme illustrée aux figures 2, 3, 4, et 5.

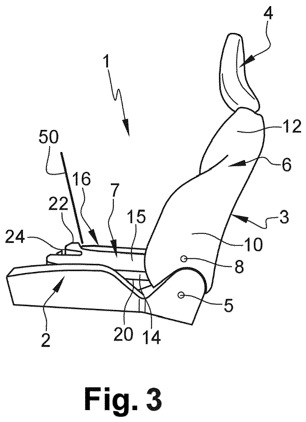

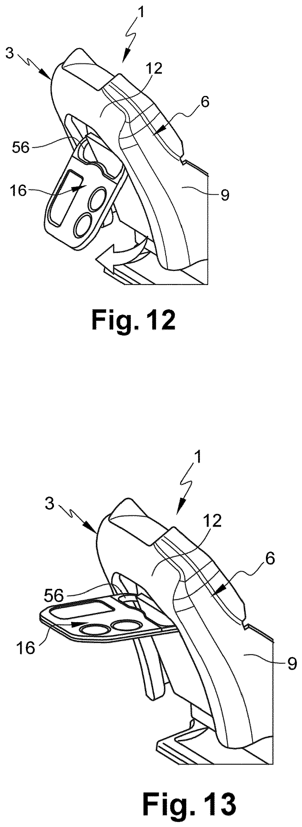

En se référant aux figures 3 et 12, la deuxième position de la tablette support 7 est atteinte par une rotation de la tablette support 16 depuis la première position sur le médaillon support 7. Cette deuxième position peut par exemple être comparable à une position de présentation, comme illustrée aux figures 3 et 13, présentant les spécificités suivantes :
- la tablette support 16 s'étend dans un plan horizontal vers l'arrière du siège 1 lorsque le médaillon support 7 est dans la position fonctionnelle, comme cela est illustré à la figure 13. Pour cette configuration, la tablette support 7 est directement accessible depuis une rangée de sièges située à l'arrière du siège selon l'invention, et permet de stocker des objets à l'usage des personnes qui seraient assises sur ladite rangée arrière,
- la tablette support 16 s'étend dans un plan 50 qui est légèrement incliné vers l'arrière par rapport à un plan vertical comme illustré à la figure 3. Pour cette configuration, la tablette support 16 sert de présentoir et peut soutenir un smartphone, une tablette électronique, un ordinateur portable ou un livre, et permet à une personne qui serait assise sur un siège voisin du siège selon l'invention, de pouvoir lire confortablement une page dudit livre ou un écran électronique d'un appareil électronique.

La figure 13 illustre la tablette support 16 dans une position intermédiaire temporaire, entre la première position qui est illustrée à la figure 11 et la deuxième position qui est illustrée à la figure 13.

Selon un autre mode de réalisation d'un siège selon l'invention la deuxième position de la tablette support peut être atteinte au moyen d'une rotation de 180° sur le médaillon support 7 depuis la première position.

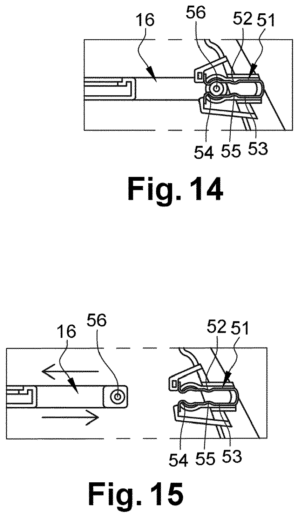

En se référant aux figures 14 et 15, la tablette support 16 est montée en rotation sur le médaillon support 7 au moyen d'éléments d'accrochage 51 déformables élastiquement. A titre d'exemple, l'un de ces moyens d'accrochages 51 présente deux bras parallèles 52, 53, définissant un premier étranglement 54 d'entrée et un deuxième étranglement 55 arrière.

En se référant à la figure 14, une poignée 56 de la tablette support 16 est insérée à force entre les deux bras 52, en passant par le premier étranglement 54 d'entrée avant de venir en butée contre le deuxième étranglement 55 arrière. Dans cette position, la tablette support 16 peut pivoter autour de sa poignée 55 qui est piégée entre le premier étranglement 54 d'entrée et le deuxième étranglement 55 arrière.

En se référant à la figure 15, la tablette support 16 peut être détachée du médaillon support 7 uniquement dans la deuxième position de présentation. En effet, la tablette support 16 peut être retirée du médaillon support 7 en faisant coulisser la poignée 56 de ladite tablette support 16 le long d'un axe longitudinal des moyens d'accrochage 51, jusqu'à ce que ladite poignée 56 sorte dudit moyen d'accrochage 51. Ce coulissement qui s'effectue suivant le plan de la tablette support 16, nécessite un certain effort pour permettre à la poignée 56 de passer à force par le premier étranglement d'entrée 54.

## Revendications

1. Siège (1) de véhicule comprenant une assise (2) et un dossier (3) réglable en inclinaison autour d'un premier axe de rotation (5), **caractérisé en ce que** le dossier (3) comprend un cadre (6) réglable en inclinaison autour du premier axe (5) de rotation et un médaillon support (7) monté pivotant autour d'un deuxième axe de rotation (8) du cadre (6) entre une position fonctionnelle pour laquelle il est placé dans le cadre (6) et forme avec celui-ci le dossier (3), et une position déployée pour laquelle il a pivoté autour du deuxième axe de rotation (8) pour se retrouver en appui contre l'assise (2), en laissant apparaitre une ouverture traversante (13) dans le dossier (3) qui est délimitée par le cadre (6), et **en ce que** le médaillon support (7) présente une tablette support (16) apte à être déplacée entre une première position pour laquelle elle est en contact avec une surface du médaillon support (7) et une deuxième position pour laquelle elle crée un support supplémentaire.

2. Siège de véhicule selon la revendication 1, **caractérisé en ce que** les dimensions du médaillons support sont supérieures ou égales à celles de l'ouverture (13) délimitée par le cadre (6) si bien que dans la position fonctionnelle le médaillon support (7) est inséré dans le cadre (6) en ne laissant subsister aucun jeu, et forme avec ledit cadre (6) un dossier (3) continu et uniforme.

3. Siège de véhicule selon l'une quelconque des revendications 1 ou 2, **caractérisé en ce que** la tablette support (16) est détachable du médaillon support (7), et **en ce qu'**une fois qu'elle a été détachée de celui-ci elle peut venir se fixer audit médaillon (7) dans la deuxième position qui est différente de la première position.

4. Siège de véhicule selon la revendication 3, **caractérisé en ce que** lorsque le médaillon support (7) est dans la position déployée la tablette support (16) dans la première position recouvre un compartiment (21, 22, 23) supérieur dudit médaillon (7), et **en ce que** dans la deuxième position ladite tablette (16) découvre ledit compartiment (21, 22, 23) pour permettre de stocker un objet dans celui-ci (21, 22, 23).

5. Siège de véhicule selon la revendication 4, **caractérisé en ce que** deux sangles (28, 29) parallèles émergent du compartiment (21, 22, 23) pour servir à maintenir un objet dans ledit compartiment (21, 22, 23).

6. Siège de véhicule selon la revendication 5, **caractérisé en ce que** le compartiment (21, 22, 23) est configuré pour recevoir un objet plan et de faible épaisseur.

7. Siège de véhicule selon l'une quelconque des revendications 3 à 6, **caractérisé en ce que** dans la deuxième position la tablette support (16) est fixée à l'avant du médaillon (14) et s'étend dans un plan sensiblement horizontal, et **en ce que** ladite tablette (16) prolonge vers l'avant une surface (21) supérieure et horizontale dudit médaillon (7).

8. Siège de véhicule selon l'une quelconque des revendications 3 à 7, **caractérisé en ce que** la tablette support (16) présente une première surface dotée de premiers reliefs et une deuxième surface dotée de deuxièmes reliefs, lesdites deux surfaces étant parallèles, et **en ce que** la première surface ou la deuxième surface peut indifféremment être utilisée pour servir de support à un objet, que la tablette soit dans la première position ou dans la deuxième position..

9. Siège de véhicule selon l'une quelconque des revendications 1 à 8, **caractérisé en ce que** la tablette support (16) est montée en rotation sur le médaillon support (7) entre la première position et la deuxième position.

10. Siège de véhicule selon la revendication 9, **caractérisé en ce que** la deuxième position est une position de présentation correspondant, lorsque le médaillon support est dans la position fonctionnelle, à une position horizontale de la tablette support qui s'étend vers l'arrière du siège, et correspondant, lorsque le médaillon support est dans la position déployée à une position légèrement inclinée vers l'arrière par rapport à une position verticale.

11. Siège de véhicule selon la revendication 10, **caractérisé en ce que** la tablette support (16) est détachable du médaillon support (7) uniquement dans la position de présentation.

12. Véhicule comprenant un siège de véhicule selon l'une quelconque des revendications 1 à 8, **caractérisée en ce que** la tablette (16) présente une empreinte, et **en ce que** ladite tablette (16) est apte à venir se fixer au volant (31) dudit véhicule dans une position horizontale grâce à une insertion d'un tronçon en arc-de-cercle du volant (31) dans ladite empreinte.
